# EUROPEAN PATENT APPLICATION

(11) **EP 4 764 489 A1**
(43) Date of publication of application: **24.06.2026**
(21) Application number: 24851478.8
(22) Date of filing: 04.07.2024
(51) Int. Cl.: G01N 30/26, G01N 30/02, G01N 30/60, G01N 30/72

(54) **LIQUID CHROMATOGRAPH AND LIQUID CHROMATOGRAPH MASS SPECTROMETER**

(30) Priority: 10.08.2023 JP 2023131220
(71) Applicant: HITACHI HIGH-TECH CORPORATION, Tokyo 105-6409 (JP)
(72) Inventor: SHIMIZU, Yusuke, Tokyo 105-6409 (JP); IIJIMA, Yu, Tokyo 105-6409 (JP); UEDA, Mitsuhiko, Tokyo 105-6409 (JP); NISHIKI, Kenichiro, Tokyo 105-6409 (JP); SEKIYA, Kazuma, Tokyo 105-6409 (JP)
(74) Representative: MERH-IP Matias Erny Reichl Hoffmann Patentanwälte PartG mbB
(86) International application number: PCT/JP2024/024332
(87) International publication number: WO 2025/033048

(57) **Abstract**

Provided is a liquid chromatograph in which a device malfunction due to discharge is less likely to occur even when liquid feeding is continued under a high pressure condition. A liquid chromatograph includes a column connection mechanism, in which the column connection mechanism includes a column installation part in which a column is to be installed, and a flow path movement mechanism configured to move and connect an analysis flow path to the column installed in the column installation part. The flow path movement mechanism includes a conductive grounding part by which the column is grounded when the analysis flow path is connected to the column.

## Description

### Technical Field

The present invention relates to a liquid chromatograph and a liquid chromatograph mass spectrometry.

### Background Art

PTL 1 discloses a column connection mechanism in which, after a column is installed in a column installation part, identification information on the column is read before the column is connected to an analysis flow path, and then the column is connected to the analysis flow path.

### Citation List

### Patent Literature

PTL 1: WO2022/131075A

### Summary of Invention

### Technical Problem

The inventors have found that, when analysis is continued for a long time using the column, a control board of a chromatograph occasionally malfunctions. As a result of intensive studies on the cause of the malfunction, the inventors have reached a conclusion that static electricity in separated particles in the column is accumulated and discharged to generate noise, which causes the malfunction of the control board. That is, it is considered that since a mobile phase (solvent, gas) is sent through the flow path filled with the separated particles at a high pressure in the column, friction occurs between the separated particles and the mobile phase, and the separated particles in the column are charged. Also in PTL 1, the necessity of grounding the column is not mentioned.

An object of the invention is to provide a liquid chromatograph and a liquid chromatograph mass spectrometry in which device malfunction due to discharge is less likely to occur even when analysis is continued for a long time.

### Solution to Problem

To achieve the above object, the invention has the following configuration. A chromatograph includes a column connection mechanism, in which the column connection mechanism includes a column installation part in which a column is to be installed, and a flow path movement mechanism that moves and connects an analysis flow path to the column installed in the column installation part. The flow path movement mechanism includes a conductive grounding part by which the column is grounded when the analysis flow path is connected to the column.

### Advantageous Effects of Invention

According to the invention, it is possible to provide a liquid chromatograph and a liquid chromatograph mass spectrometry in which device malfunction due to discharge is less likely to occur even when analysis is continued for a long time.

### Brief Description of Drawings

[FIG. 1] FIG. 1 is a front view of a column connection mechanism.
[FIG. 2] FIG. 2 is a top view of the column connection mechanism.
[FIG. 3] FIG. 3 is an enlarged view of the column connection mechanism.
[FIG. 4] FIG. 4 is a front view of the column connection mechanism (when a column is connected with a flow path) .
[FIG. 5] FIG. 5 is a schematic diagram of a liquid chromatograph mass spectrometry that is obtained by combining a liquid chromatograph with a mass spectrometry.

### Description of Embodiments

Hereinafter, embodiments of chromatography using a column will be described with reference to the drawings.

As an example, a column is obtained by filling an elongated cylindrical container at high pressure with a filler of particles in which various functional groups are bonded to a base material such as silica gel or polymer gel. The chromatography is a method of separating substances by utilizing a fact that a difference in affinity (interaction) between a stationary phase and a mobile phase flowing in contact with the stationary phase varies depending on the substance. As a mobile phase, liquid chromatography uses liquid, and gas chromatography uses gas.

In the following embodiments, a liquid chromatography (HPLC) is described as an example. However, the invention can be applied to all chromatograph devices using a column, and can also be applied to, for example, a clinical test device including gas chromatography, ultra-high performance liquid chromatography, HPLC/MS, and a column separation part.

### Embodiment 1

A general HPLC includes a liquid feeding pump, an injector, a column, a column oven for temperature adjustment of the column, and a pipe for connecting the liquid feeding pump, the injector, and a separation column. An overall configuration of the device according to the present embodiment is a multi-stream HPLC device in which a plurality of HPLC flow paths are coupled to one detection unit via a stream selection valve that switches the HPLC flow paths, and mutual analysis can be performed. The HPLC flow paths have the same configuration and are disposed in parallel. Since the column itself is a consumable to be periodically replaced, an analysis flow path and the column are periodically attached and detached.

The column is provided with a management electronic tag (hereinafter, referred to as a column tag) in which a manufacturing time and a recommended analysis condition are recorded in advance so as not to mix up columns during replacement. Instead of the column tag, information can also be managed using a barcode applied to a column body or the like.

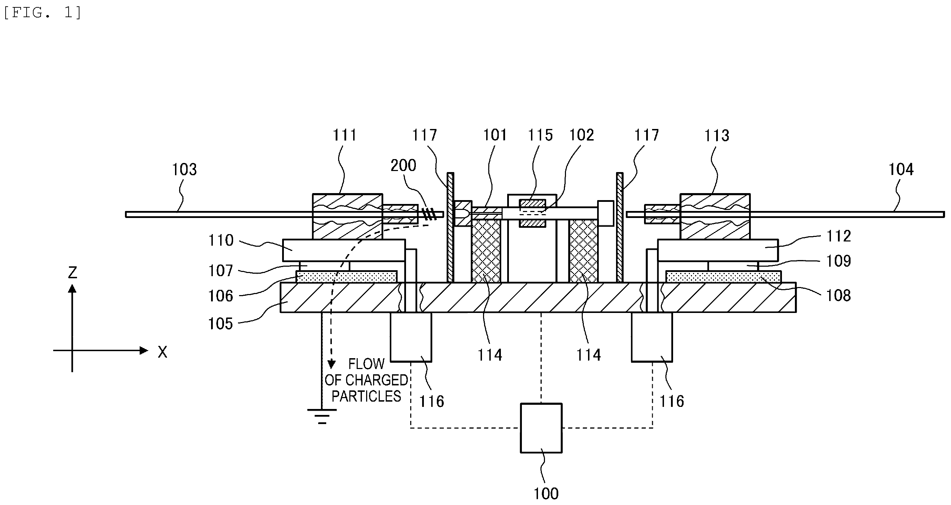

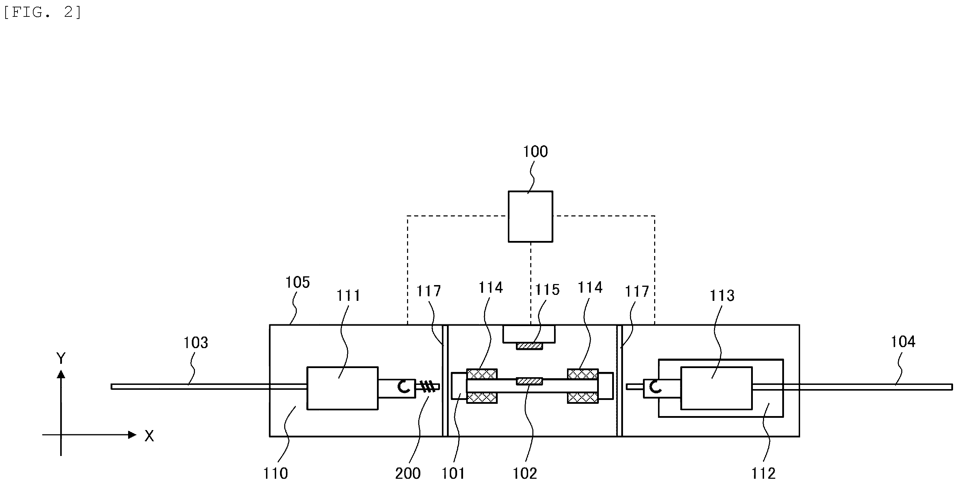

A connection mechanism (column connection mechanism) between a column and an analysis flow path will be described with reference to FIG. 1 (front view) and FIG. 2 (top view).

A column 101 provided with a column tag 102, an inlet side flow path 103, and an outlet side flow path 104 are located on a straight line (Y coordinates and Z coordinates are equal), and the inlet side flow path 103 and the outlet side flow path 104 are linearly moved, so that the column 101 and the flow paths are detachably disposed.

The inlet side flow path 103 and the outlet side flow path 104 are made of stainless steel having an inner diameter of 0.1 mm and an outer diameter of 1/16 inches (≒ 1.59 mm). The diameters and the material are not required to be limited thereto, and can be appropriately set.

An inlet side guide rail 106 and an inlet side guide block 107 on the inlet side flow path 103 are disposed on an exchange mechanism base 105, and linearly move the inlet side flow path 103. Although a rail-shaped guide and a block are illustrated in FIG. 1, any configuration capable of attaining linear movement, such as a shaft and a bush, may also be used. The outlet side flow path 104 is disposed symmetrically to the inlet side with respect to a center of the column 101. Similarly to the inlet side guide rail 106 and the inlet side guide block 107, an outlet side guide rail 108 and an outlet side guide block 109 that linearly move the outlet side flow path 104 are also disposed symmetrically with respect to the center of the column 101.

An inlet side flow path base 110 and an inlet side flow path guide block 111 are disposed on the inlet side guide block 107. Following the movement of the inlet side guide block 107, the inlet side flow path 103 is inserted into an inlet of the column 101.

Similar to the inlet side, an outlet side flow path base 112 and an outlet side flow path guide 113 are disposed on the outlet side guide block 109. Following the movement of the outlet side guide block 109, the outlet side flow path 104 is inserted into an outlet of the column 101.

When the column 101 is installed on a column installation stand b (a "column installation stand" is referred to as a column installation part in the claims), a reading device 115 is disposed on a straight line parallel to a center position of the column tag 102 in a depth direction on a paper surface in FIG. 1 (X coordinates and Z coordinates are equal). This mechanism is referred to as a "flow path movement mechanism" in the claims.

Linear movements of the inlet side flow path 103 and the outlet side flow path 104 are restricted by electric locks 116, respectively, each of which causes a tip end rod to perform an extension-retraction operation so as to prevent the column from coming into contact with the inlet side flow path 103 and the outlet side flow path 104 until the reading device 115 reads the column tag 102 (first reading) and confirms correctness and incorrectness of the installed column 101. Examples of the electric lock 116 include those that perform a linear movement, such as an electromagnetic solenoid, a pneumatic cylinder, and a hydraulic cylinder.

When the column 101 is installed on a column installation stand 114, column protection covers 117 are installed on the inlet side and the outlet side of the column 101, so that an operator does not inadvertently come into contact with the column 101, the inlet side flow path 103, and the outlet side flow path 104. The column protection covers 117 are formed with holes through which only the inlet side flow path 103 and the outlet side flow path 104 pass when the column 101 is connected to the inlet side flow path 103 and the outlet side flow path 104. When the inlet side flow path 103 and the outlet side flow path 104 have an outer diameter of 1/16 inches (≒ 1.59 mm), a diameter of the holes is desirably about 2 mm.

To connect the column 101 to the inlet side flow path 103 and the outlet side flow path 104, it is necessary to continuously press the column from each flow path side with a constant force. Examples of a pressing unit include a manual handle, an electric motor, and an air cylinder.

When it is determined that the column 101 is correct in the first reading, the electric locks 116 are released (the tip end rods of the electric locks 116 move to positions where the linear movements of the inlet side flow path 103 and the outlet side flow path 104 are not restricted), and the inlet side flow path 103 and the outlet side flow path 104 can be connected to the column 101. At this time, a spring 200 made of stainless steel and provided in the vicinity of a tip end of the inlet side flow path 103 comes into electrical contact with the column 101. The spring 200 made of stainless steel is grounded so that electrons accumulated in the column 101 can be discharged to the ground. A grounding mechanism including the "spring made of stainless steel" is referred to as a "grounding part" in the claims.

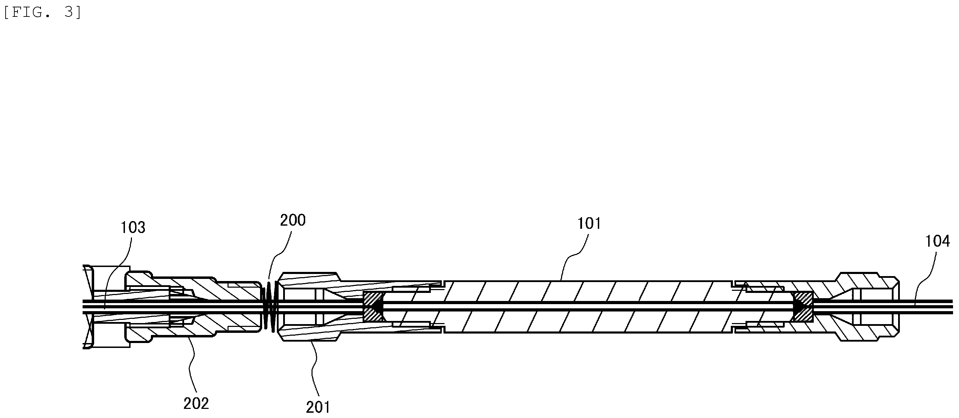

FIG. 3 is an enlarged view of a connection part between the column and the flow paths. The column 101 has a structure in which an outer cylinder made of a nonconductive synthetic resin (PEEK) is filled with separated particles (not illustrated). Since an outer cylinder in a column having a related-art structure has no conductivity, it is speculated that static electricity accumulated in separated particles cannot be discharged due to friction between the separated particles and a mobile phase, and when a discharge limit is exceeded, the static electricity is discharged to the atmosphere, causing noise.

To prevent this situation, a cylindrical member 201 made of a conductive material (SUS in this embodiment) is fitted into the column 101. The spring-shaped member 200 made of a conductive material (SUS in this embodiment) is provided in a manner of coming into electrical contact with the cylindrical member 201 when the column and the analysis flow path are connected. The spring-shaped member 200 is attached to the analysis flow path side. On the other hand, a cylindrical member 202 made of a conductive material is also provided on the analysis flow path side. The cylindrical member 202 is in contact with a device structure (not illustrated) made of a conductive material such as metal. The above spring-shaped member can also be expressed as a "coil spring" or a "compression spring".

When the column and the analysis flow path are connected by the connection mechanism, a conductive path is formed that runs from the cylindrical member 201 via the spring-shaped member 200 to the cylindrical member 202, and then to ground via the device structure in contact with the cylindrical member 202. The static electricity accumulated in the separated particles in the column 101 can be discharged to the ground through the conductive path.

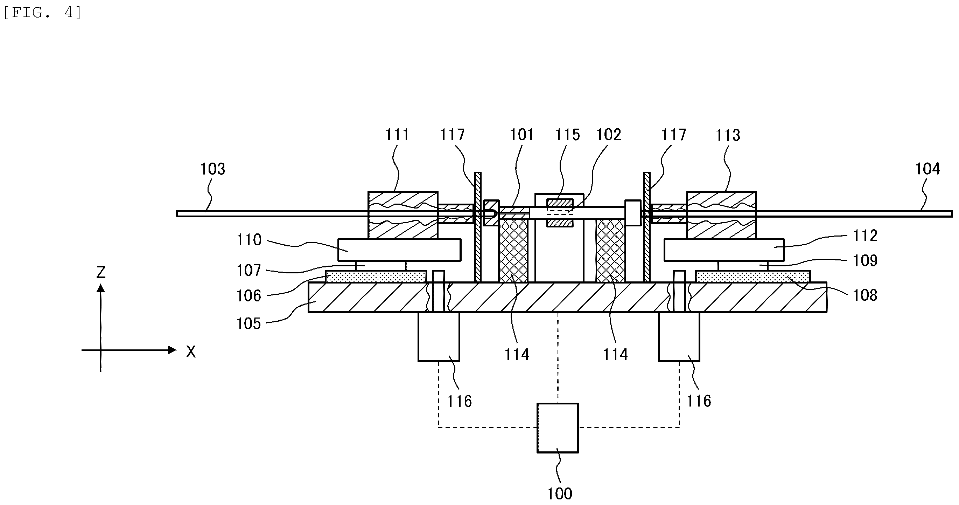

FIG. 4 illustrates a state in which the column 101 is connected to the inlet side flow path 103 and the outlet side flow path 104. When it is determined that the column 101 is incorrect in the first reading, the electric locks 116 are not released (the tip end rods of the electric locks 116 remain protruding at positions where the linear movements of the inlet side flow path 103 and the outlet side flow path 104 are restricted). Therefore, this column is removed, and the column installation is performed again.

After the column 101 is connected to the inlet side flow path 103 and the outlet side flow path 104, the column tag 102 is read again (second reading) to confirm that the column tag 102 is the same as that in the first reading, so that the operator does not mistakenly use another column after the first reading. When it is determined that the column 101 is incorrect in the second reading, it is necessary to perform reset operations such as taking out the column 101 from the column installation stand 114, returning the inlet side flow path 103 and the outlet side flow path 104 to a state before the connection (initial position), and bringing the rods of the electric locks 116 into a protruding state, and thus, it is desirable to detect the initial position by using a photo interrupter as an example.

A control unit 100 receives results of the first reading and the second reading performed by the reading device 115 and controls operations of the electric locks 116. The control unit 100 may store information necessary for verifying the correctness of the installed column 101 in advance, or may acquire the information from outside. The control unit 100 is not required to be provided in the column connection mechanism, and may be an external control device.

After the above steps, the mobile phase and an analysis sample are sent to the column 101, and the analysis is performed by a chromatograph.

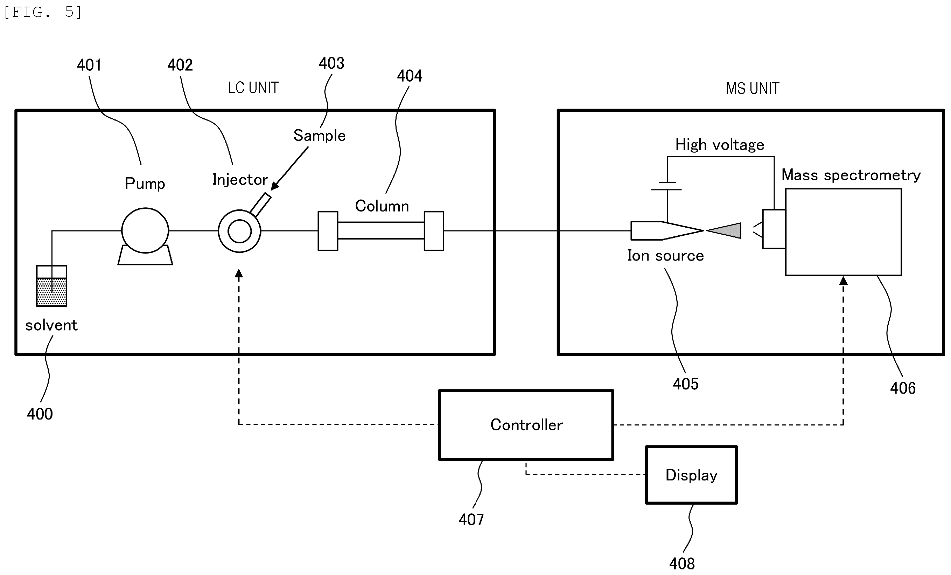

FIG. 5 is a schematic diagram of an LC-MS analyzer in which a liquid chromatograph (LC unit) is connected to a mass spectrometry (MS unit). A solvent 400 for dispersing an analyte is aspirated by a pump 401 and caused to flow through a pipe. A sample 403 as an analyte is injected into the solvent in the pipe by an injector 402 provided in the middle of the pipe.

A solvent containing the analyte is introduced into a column (separation column) 404. Analytes separated by the separation column according to an elution time for each substance are sequentially ionized by an ion source 405, introduced into a mass spectrometry 406, and separated at a mass-to-charge ratio (m/z), so that the analysis of the analytes is attained. The LC unit and the MS unit are controlled by one controller (PC) 407. A measurement result and the like are displayed on a display (display device) 408 connected to the PC.

In general-purpose liquid chromatograph (LC) and mass spectrometry (MS), a liquid sample separated by a column is ionized and vaporized by being subjected to application of a high voltage of about 3 kV to 5 kV in the ion source before MS insertion and being further heated at 200°C to 500°C. Therefore, in the LC-MS analyzer having this structure, the high voltage applied to the ion source may be transmitted to the upstream LC unit via the conductive liquid sample and accelerate charging of the separated particles in the column. In related-art devices, a connection union for connecting flow paths is provided upstream of an ion source. Since the connection union is often grounded, the charging of the separated particles may not be a problem in a related-art LC-MS apparatus.

However, in the connection union, an inner diameter of the flow path increases at the connection part, and separation (chromatography) performance in the column may deteriorate, and thus it is desirable to not provide the connection union if possible. The LC-MS apparatus illustrated in FIG. 5 shows a case where a connection union is not included.

When the LC-MS apparatus does not include the connection union, separated particles in the column are charged, and there is a risk of malfunction of peripheral devices due to discharge. The configuration of the invention in which the static electricity charged on the separated particles in the column may be directly grounded is the most suitable since a decrease in the separation (chromatography) performance in the column can also be avoided.

### Reference Signs List

- 100:: control unit
- 101:: column
- 102:: column tag
- 103:: inlet side flow path
- 104:: outlet side flow path
- 105:: exchange mechanism base
- 106:: inlet side guide rail
- 107:: inlet side guide block
- 108:: outlet side guide rail
- 109:: outlet side guide block
- 110:: inlet side flow path base
- 111:: inlet side flow path guide block
- 112:: outlet side flow path base
- 113:: outlet side flow path guide
- 114:: column installation stand
- 115:: reading device
- 116:: electric lock
- 117:: column protection cover
- 501:: column
- 502:: column cartridge
- 503:: column tag
- 504:: column cartridge installation stand

## Claims

1. A liquid chromatograph comprising:
a column connection mechanism, wherein
the column connection mechanism includes
a column installation part in which a column is to be installed, and
a flow path movement mechanism configured to move and connect an analysis flow path to the column installed in the column installation part, and
the flow path movement mechanism includes a conductive grounding part by which the column is grounded when the analysis flow path is connected to the column.

2. The liquid chromatograph according to claim 1, wherein
at least a part of the grounding part is made of a spring-shaped member.

3. The liquid chromatograph according to claim 2, wherein
at least a part of the spring-shaped member is made of a material including stainless steel.

4. A liquid chromatograph mass spectrometry that is obtained by combining the liquid chromatograph according to any one of claims 1 to 3 with a mass spectrometry, wherein
the liquid chromatograph and the mass spectrometry are connected without a connection union.
